**Europäisches Patentamt**

**European Patent Office**

**Office européen des brevets**

(19)

(11) Veröffentlichungsnummer: **0 161 642**
**A1**

(12) # EUROPÄISCHE PATENTANMELDUNG

(21) Anmeldenummer: 85105745.5

(22) Anmeldetag: 10.05.85

(51) Int. Cl.⁴: **F 16 H 9/24**

(30) Priorität: 17.05.84 DE 3418281
26.01.85 DE 3502687

(43) Veröffentlichungstag der Anmeldung: 21.11.85
Patentblatt 85/47

(84) Benannte Vertragsstaaten: **AT CH DE FR GB IT LI NL SE**

(71) Anmelder: **Tausend, Erich, Hirschwelhe 5,
D-7913 Senden (DE)**

(72) Erfinder: **Tausend, Erich, Hirschwelhe 5, D-7913 Senden
(DE)**

(54) **Kraftübertragungselement für stufenlos regelbare Getriebe.**

(57) Es betrifft eine besondere Bauart von Umschlingungsgetrieben, welche prinzipmässig aus zwei Paaren von axial verstellbaren Kegelscheiben und einem endlosen Kraftübertragungselement bestehen. Letzteres weist eine kettenähnliche Struktur auf und die Kettenglieder sind durch wechselseitige Überlappung zugschlüssig verbunden.

Zum Zweck, die Zugfestigkeit dieser Kettenglieder (1a, 1i) durch Optimierung der Gestaltfestigkeit zu verbessern, sind diese zangenartig ausgebildet und jedes Kettenglied ist mittels eines Vorspannkeiles (2) intern vorgespannt.

Die Radialzentrierung der Kettenglieder untereinander erfolgt stirnseitig an den Keilbacken (3) durch Zentriermulden (11), Zentrierzapfen (31) und Zentrieransätze (32a, 32i).

Die Keilbacken (3) vermitteln den Reibkontakt zwischen Kegelscheiben und Kettengliedern, sie weisen gegenüber letzteren eine andere Werkstoffeigenschaft auf und sind an den Kettengliedern formschlüssig, aber in der Planebene drehbar zentriert. Zur Axialfixierung der Keilbacken sind Backenklammern (4) vorgesehen.

0161642

## Kraftübertragungselement für stufenlos regelbare Getriebe.

Die Erfindung betrifft ein Kraftübertragungselement für stufenlos regelbare Getriebe nach der Art der Umschlingungsgetriebe, welche in der Regel aus zwei Paaren von axial verstellbaren Kegelscheiben und einem endlosen Kraftübertragungselement bestehen, wobei letzteres eine kettenähnliche Struktur aufweist.

Kettenähnliche Kraftübertragungselemente für den genannten Verwendungszweck sind bereits vielfach vorgeschlagen worden. Die aus dem Stand der Technik hervortretenden Merkmale sind allgemein darauf ausgerichtet, die übertragbare Leistung bei diesen Getrieben zu verbessern, woraus folgende bezüglich der Getriebeleistung maßgebende Einflußgrößen erkennbar sind:

a) Zugfestigkeit des Kettenstranges in der Umlaufrichtung.

b) Biegefestigkeit und Druckelastizität der Kettenglieder quer zur Umlaufrichtung.

c) Druckfestigkeit und Verschleißwiderstand der Reibkontaktflächen an den Stirnseiten der Kettenglieder, über welche die Reibkraft übertragen wird.

d) Die Anzahl der augenblicklich an einem Kegelscheibenpaar in Reibeingriff stehenden Kettenglieder, die Reibkontaktdichte, oder auch die gesamte wirksame Reibkontaktfläche.

Im Gegensatz zum flexiblen Band (Keilriemen) gibt es beim kettenähnlichen Kraftübertragungselement für jedes Kettenglied an einer Kegelscheibe nur einen Kontaktpunkt oder eine radiale Kontaktlinie. Eine Verbreiterung der Flankenfläche am Kettenglied ergibt keine Vergrößerung der Kontaktfläche, es werden dadurch nur die Reibungsverluste an den Einlauf und Auslauftangentpunkten vergrößert,
Geht man davon aus, daß nach dem Stand der Technik die Werkstoffbelastbarkeit voll ausgeschöpft ist, dann bleibt offensichtlich als Mittel zur wirksamen Steigerung der Reibungskraft nur die Reduzierung der Kettenteilung, d.h. auf gegebener Umschlingungslänge die Anzahl der Reibkontaktstellen
- die Reibkontaktdichte - zu vergrößern.

0161642

Ein aussagefähiges Maß bezüglich der Reibkontaktdichte wird durch das Verhältnis

Kettenteilung / Umschlingungsradius = t/r angegeben. Mit diesem Wert ist der Polygon- oder Gelenkbeuge-winkel arc $\alpha$ ausgedrückt, auch als Teilungswinkel zu bezeichnen, er sagt aus über den kinematischen Fehler, welcher an den Ein- und Auslauftangentpunkten auftritt (Polygoneffekt) und ist verantwortlich für die nachteiligen Erscheinungen wie Schwingungsanregung, Laufgeräusch und Bohrreibungsverluste. Je kleiner dieser Wert t/r wird, umso kleiner werden damit alle diese schädlichen Auswirkungen, welche einer Leistungsoptimierung entgegenstehen.

Maßnahmen zur Verkleinerung der Kettenteilung bei Laschenketten sind zum Beispiel in den Druckschriften DE-OS 3027834 und DE-OS 3032148 angegeben. Daraus ist ersichtlich, daß wegen der unumgänglichen Reihenanordnung von Laschenstegen und Querelementen diese Kettenstruktur nicht geeignet ist, um eine wirksame Teilungsverkleinerung zu ermöglichen.

Ein bezüglich der Kettenteilung vorteilhafteres System wird in der Druckschrift DE-PS 2116930 aufgezeigt. Hier sind massive metallene Querglieder in der Umlaufrichtung mittels eines endlosen Stahlbandes druckverspannt; das zuggespannte Stahlband und die druckverspannten Querglieder bilden dabei zusammen ein geschlossenes Verspannungssystem. Da bei dieser Ausführung in Umlaufrichtung kein Raum für Gelenkteile benötigt wird, kann das Teilungsmaß (von Mitte Querglied zu Mitte Querglied) relativ klein ausgeführt werden. Ein Mangel an diesem System ist allerdings darin zu sehen, daß zur Gewährleistung der Übertragungsfunktion die innere Vorspannkraft wesentlich größer sein muß als die größte äußere Betriebs-Umfangskraft. Dadurch werden die Gelenkkanten "A" an den Quergliedren allein durch innere Kräfte wesentlich höher beansprucht als durch die äußeren Betriebskräfte. Da die Gelenkkanten "A" einen radialen Abstand zur Spannbandmitte haben, entsteht aus der Verformungsmechanik bei jeder Änderung der Bandkrümmung zwangsweise eine Relativverschiebung, welche Reibungsverluste und Verschleiß verursachen muß.

Eine Kettenstruktur mit zugbelasteten Gliedern und kleiner Teilung wird in den Druckschriften DAS 1137609 und DE-OS 2949061 vorgeschlagen. Hier haben die prismatischen Querglieder ein angenähert U-förmiges Profil (Doppelhaken) und die zugschlüssige und gleichzeitig gelenkige Verbindung der Kettenglieder erfolgt dadurch, daß die Kettenglieder wechselseitig ineinander verhakt (überlappt) sind. Dabei wird kein zusätzliches Gelenkelement benötigt, woraus sich strukturbedingt eine relativ kleine Kettenteilung ergibt. Die Zentrierung der Kettenglieder in der Radialrichtung erfolgt hier innerhalb des gesamten Überlappungsbereiches. Diese Art der Radialzentrierung und die vorgeschlagene Gelenkkinematik machen es notwendig, daß die Innenseiten der Überlappungsschenkel hinterschnitten werden. Dadurch wird der Biegequerschnitt des Überlappungsschenkels wesentlich geschwächt, es entsteht ein relativ grosser Biegehebelarm und eine spitzwinkelige Hohlkehle mit nur kleinem Radius. Dieser Profilform haftet der Mangel an, daß sie eine sehr ungünstige und kritische Beanspruchungsverteilung verursacht, vor allem infolge der Kerbwirkung der Hohlkehlen. Wegen der schlechten Materialausnutzung ist ein im Verhältnis zur äußeren Zuglast großes Dickenmaß an den Überlappschenkeln notwendig. Diese Stelle ist aber das Kriterium für das kleinstmögliche Teilungsmaß.

Ein weiterer Nachteil an diesen Vorschlägen ist darin zu sehen, daß die Stirnseiten der Kettenglieder unmittelbar für den Reibkontakt mit den Kegelscheiben genutzt werden. Aus der vorgegebenen Form der Berührkörper (Kegelscheibe und Kettengliedflanken) ergeben sich je Kettengliedstirnseite nur eine punktförmige Kontaktstelle, sodaß die gesamte Reibkontaktfläche relativ klein ist.

Aufgabe der Erfindung ist es deshalb, den Stand der Technik hinsichtlich der Getriebeleistung und des Übertragungswirkungsgrades zu verbessern, wobei durch Optimierung der Gestaltfestigkeit der Kettenglieder deren Zug- und Biegefestigkeit gesteigert, die Kettenteilung weitgehend verkleinert und damit insgesamt die Reibkontaktdichte vergrößert werden sollen.

Die Lösung der Aufgabe geht aus den kennzeichnenden Teilen der Ansprüche hervor.

Der mit den erfindungsgemäßen Mitteln angestrebte technische Fortschritt besteht im wesentlichen darin, daß durch Abbau der gestaltbedingten kritischen Spannungskonzentrationen innerhalb des Kettengliedes ein günstigerer Kraftfluß geschaffen wird. Die Zugfestigkeit des Kettengliedes, vor allem aber die für die Betriebsbelastung kritische Dauerfestigkeit werden dadurch wesentlich gesteigert.

Die vorgeschlagene Anordnung von Keilbacken als Mittel zur Reibkraftübertragung ermöglicht eine genaue rechnerische Behandlung der Umschlingungskinematik, gestattet eine für die Reibkraftübertragung optimale Werkstoffauswahl und ergibt mit den sehr schmalen, radial gestreckten Keilflanken eine große wirksame Reibkontaktfläche, damit die durch die Festigkeitsverbesserung gewonnene Zuglaststeigerung auch als Reibkraft an den Kegelscheiben umgesetzt werden kann.

Ausführungsbeispiele der Erfindung werden nachfolgend unter Bezugnahme auf folgende zeichnerischen Darstellungen beschrieben:

Fig.1:  Kettenabschnitt in Umlaufrichtung mit Teilansicht auf die Stirnseite der Kettenglieder (ohne Keilbacken) und Teilansicht auf die Keilflächen der Keilbacken.

Fig.2:  Querschnitt II  aus Fig.1  durch ein Kettengliedpaar mit zugehörigem Keilbacken.

Fig.3:  Tangentialschnitt III  aus Fig.2  durch eine Keilbackenreihe.

Fig.4:  Profildetail der Kettenglieder vom Bereich der Gelenkdruckflächen (stark vergrößert).

Fig.5:  Alternativausbildung zu Fig.4.

Fig.6 bis Fig.8:  Darstellung der inneren Verspannung.

Fig.9 und Fig.10: Alternativausbildung der Kettenglieder und deren Radialzentrierung.

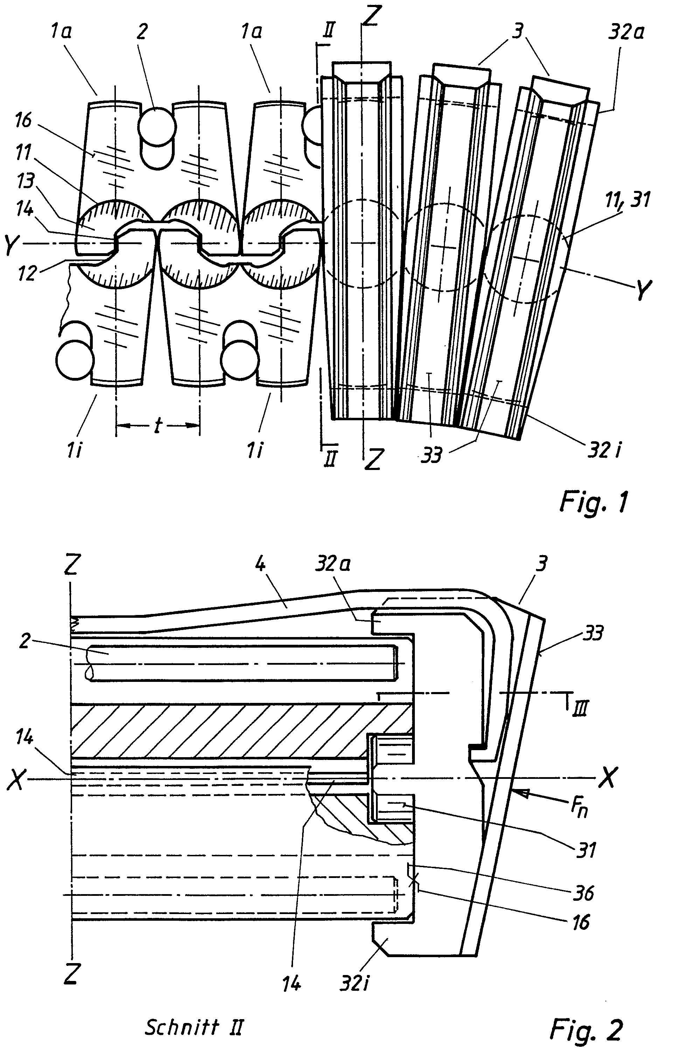

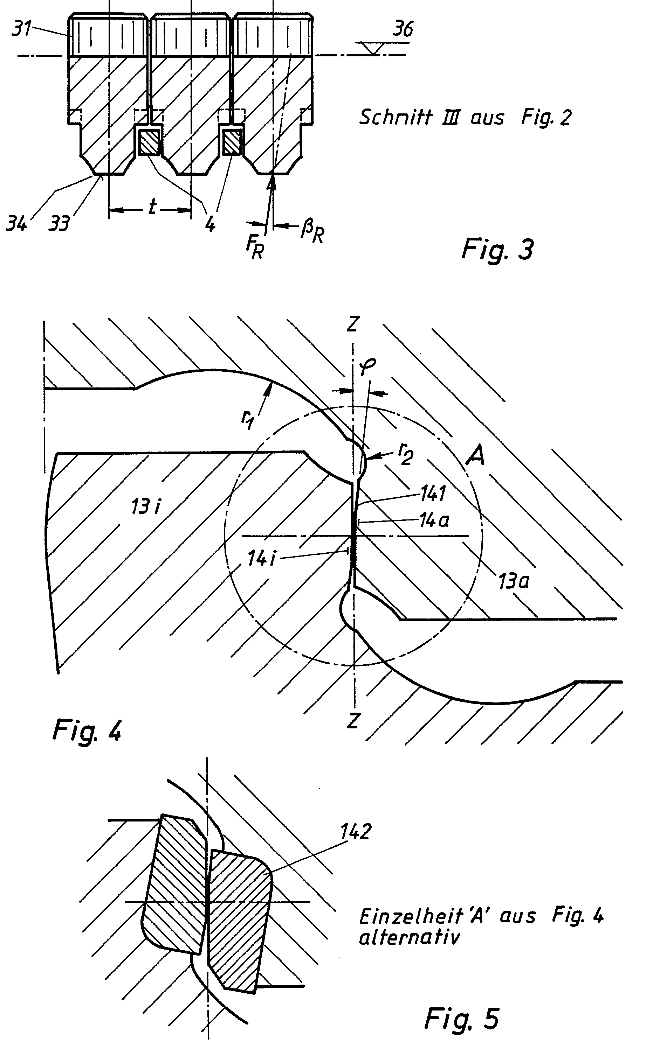

Zu Fig.1 und Fig.2 : Die Kettenglieder haben ein zangenartiges Profil.

Die kettenmäßige, zugschlüssige Gliedverbindung wird in bekannter Weise durch wechselseitiges Ineinandergreifen der Kettenglieder 1a, 1i hergestellt. Die äußeren Kettenglieder 1a und die inneren Kettenglieder 1i bilden längs der Teillinie Y-Y je eine geschlossene Gliederreihe, beide sind in bekannter Weise gegeneinander um das Teilungsmaß t in Umlaufrichtung versetzt. Die sich überlappenden Teile der Kettenglieder sind als Zangenbacken 13, die gegen die Teillinie offene Aussparung ist als Zangenkehle 12 bezeichnet.

Wirkung und Zweck des Zangenprofiles werden später erläutert.

Die Übertragung der Zuglast von einem Kettenglied auf das andere erfolgt über die Gelenk-Druckleisten 14, welche an der Kehlseite der Zangenbacken 13 abgesetzt sind. Die belasteten Flächen dieser Druckleisten sind senkrecht zur Umlaufrichtung (in der X-Z-Ebene) ausgerichtet. Sie sind in der Z-Richtung sehr schmal (etwa 0,1 $\times$ Teilungsmaß t) und ermöglichen dadurch eine Kippbewegung zwischen zwei zusammenhängenden Kettengliedern. Die Gelenk-Druckleisten 14 weisen keine formschlüssige Zentrierung auf, die Kettenglieder sind auf den Druckleisten in der Radialrichtung (=Z-Richtung) verschiebbar.

Die gelenkmäßige Zentrierung von zwei zusammenhängenden Kettengliedern wird an deren Stirnseiten durch Zentrierzapfen 31 und Zentrieransätze 32a, 32i der Keilbacken 3 bewirkt. An den Stirnseiten eines jeden Kettengliedes sind kreisförmige Zentriermulden 11 eingesenkt, deren Kreismittelpunkt die Gelenkmitte bestimmt. Dabei begrenzen die Zentrierzapfen 31 die Lage der Kettenglieder senkrecht gegen die Teillinie und die Zentrieransätze 32a, 32i begrenzen die Lage senkrecht von der Teillinie weg.

Mit diesen Merkmalen kann - als Lösung der Aufgabenstellung - die Kettenteilung t so klein ausgeführt werden, daß auch mit kleinstmöglichen Umschlingungsradius der Teilungswinkel $\alpha_1 = t/r$ nur die Größenordnung 0,1 erreicht. Folglich kann die aus der Umfangszugkraft an einem Gelenkpunkt resultierende radiale Kraftkomponente maximal auch nur die Größenordnung von 0,1 Umfangszuglast erreichen, wird also kleiner sein als die an den Gelenk-Druckleisten vorhandene Reibungskraft. Es kann also davon ausgegangen werden, daß die radial wirksamen Zentrierstellen 11, 31, 32a, 32i aus den Betriebskräften nicht beansprucht werden, sondern nur der Einlaufjustierung dienen.

In Fig.4 ist in starker Vergrößerung ein Beispiel für die Ausführung der Zangenbacken 13 mit den Gelenk-Druckleisten 14 dargestellt. Die gelenkige Lastabstützung erfolgt an den Druckleisten nach dem bekannten Prinzip der Wiegegelenke:

Eine Wiegekante mit mehr oder weniger großer Kantenrundung und Kantenwinkel kleiner als $180^o$ aber größer als $90^o$ wälzt oder kippt auf einer ebenen Platte.

Im Ausführungsbeispiel ist die Wiegekante dadurch erzeugt, daß die Druckleisten der äußeren Kettenglieder eine Innenanfasung $141$ mit einem kleinen Fasenwinkel $\varphi$ erhalten, welcher etwa so groß ist wie der größte Teilungswinkel $\alpha_L$. Es wird vorausgesetzt, daß infolge der hohen Pressungswerte die stumpfe Fasenkante elastisch abgeplattet wird, sodaß unter Last die Kante gerundet ist.

Wenn äußere und innere Kettenglieder gleich sein sollen, was aber nicht unbedingt Voraussetzung ist, kann die Innenanfasung 141 an allen Kettengliedern vorgesehen werden (wie dargestellt). Dabei müssen die Fasen so versetzt sein, daß unter allen Umständen eine Kante des Außengliedes auf einer ebenen Fläche des Innengliedes liegt.

Es ist Voraussetzung, daß die Gelenk-Druckleisten gehärtet sind. Um in der Hohlkehle die Bildung von Gefügekerben zu vermeiden, wird man zweckmäßig den ganzen Zangenkehlbereich härten.

Als Alternative zum Grundkonzept nach Fig.4 wird in Fig.5 vorgeschlagen, die Gelenk-Druckleisten als Einsatzleisten 142 aus Fremdmaterial, z.B. Hartmetall, einzusetzen. Damit ergibt sich der Vorteil, daß einerseits für die Druckleisten die Härteeigenschaft und andererseits für alle anderen Kettengliedbereiche die Zugfestigkeits- und Zähigkeitseigenschaften optimiert werden können.

Im Gegensatz zu dem betrachteten Stand der Technik haben die Kettenglieder der Erfindung selbst keinen Kontakt mit den Kegelscheiben. Die Stirnseiten der Kettenglieder sind zur Drehebene (Y-Z-Ebene) planparallel. Der Reibkontakt mit den Kegelscheiben erfolgt über die Keilbacken 3 . Jeder Gelenkachse ist
ein Keilbackenpaar zugeordnet, sodaß im Umschlingungsbereich
die aus der Umfangskraft resultierende Radialkraft unmittelbar am Gelenkpunkt auf die Kegelscheiben abgestützt wird.
Gegen die Kettenglied-Stirnseiten 16 sind an den Keilbacken
planparallele Druckflächen 36 vorgesehen. Zentrierzapfen 31
bewirkt die Zentrierung des Keilbackens bezüglich der Gelenkachse.

Es sind aus dem Stand der Technik Vorschläge bekannt, wonach
Keilbacken oder Reibbacken formschlüssig mit einem Querelement
oder mit einem Kettenlängselement starr verbunden sind.
Der wesentliche Unterschied der Erfindung bezüglich dieses
Standes der Technik ist darin zu sehen, daß jeder Keilbacken
gleichzeitig an einem äußeren und einem inneren Kettenglied,
welche beide in der Kettenreihe gelenkig zusammenhängen,
druckfest anliegt, und gegenüber beiden anliegenden Kettengliedern in der Planebene verschwenkbar ist.
Da die zwei gelenkig zusammenhängenden Kettenglieder an ihren
Stirnseiten zwischen den Keilbacken - bedingt durch die axiale
Scheiben-Anpreßkraft - eingeklemmt sind, wird die Gelenkbewegung zwischen den beiden Kettengliedern durch das Stirn-Reibmoment behindert. Dieses erweist sich aber bei genauerer Untersuchung der Einflußfaktoren als sehr klein. Durch geeignete
Werkstoffkombination und Schmierung kann die an dieser Stelle
verursachte Verlustleistung auf einen Wert reduziert werden,
welcher kleiner ist als bei Bolzengelenken von Laschenketten.

Die Übertragung der Reibkraft zwischen Kegelscheiben und Kettenglieder erfolgt über die Keilbacken 3. Die beispielsweise
Ausführung dieser Keilbacken hinsichtlich ihrer Funktion zur
Reibkraftübertragung ist in den Zeichnungen Fig.1 , Fig.2 und
Fig.3 veranschaulicht.
Im Bereich der Kettenteillinie und radial außerhalb derselben
entspricht die Länge eines Keilbackens in Umlaufrichtung dem
Teilungsmaß t. Der Längeneinzug radial nach innen ergibt sich
aus dem größten zugelassenen Teilungswinkel. Die Keilbacken
sollen in der Umlaufrichtung spielfrei aneinanderliegen.
Die Keilreibflächen 33 sind als schmale in der Radialrichtung gestreckte Rechtecke ausgebildet. Sie haben unter einem Winkel von ca. 45° bis 60° scharf abgesetzte Kanten 34 (Querschnitt Fig.3); damit soll erreicht werden, daß ein Schmierfilm abgeschnitten und hydrodynamisches Gleiten verhindert wird.

Mit Rücksicht auf den Gelenkmechanismus ist es nicht möglich, die Keilbacken starr an den Kettengliedern zu befestigen. Auf die Keilbacken wirken zwar keine Betriebsbelastungen axial nach außen, sie müssen aber gegen Herausfallen gesichert sein. Für diese Aufgabe sind U-förmig gebogene, federnde Backenklammern 4 vorgesehen, welche jeweils stirnseitig gegenüberliegende Keilbacken zusammenhalten und unter Federspannung gegen die Stirndruckflächen der anliegenden Kettenglieder pressen. Im gezeichneten Beispiel Fig.2 und Fig.3 sind die Backenklammern jeweils zwischen den Keilbacken angeordnet und umspannen die Kettenglieder radial außen. Sie können aber auch radial innen umspannend angeordnet sein. Alternativ können die Backenklammern auch auf Mitte Keilbacken gesetzt werden, wozu diese eine radiale Bohrung bis etwa zur Gelenkachse erhalten. Eine andere Art der axialen Keilbackensicherung kann so ausgeführt werden, daß an den äußeren Schenkeln der Kettenglieder parallel zur Umlaufrichtung Nuten angebracht sind, in welche formschlüssig mit den Keilbacken verbundene Federelemente eingreifen.

Die Form der Keilbacken, deren kleine Abmessungen und die Art ihrer Beanspruchung sind eine günstige Voraussetzung für ein pulvermetallurgisches Herstellverfahren. Neben dem Vorteil bei den Herstellkosten ist jedoch der technologische Vorteil bedeutsam, daß man damit Metallmischungen erhalten kann, welche im Schmelzverfahren nicht herstellbar sind. Für die Keilbackenfunktion gemäß der Erfindung wäre anzustreben, daß durch geeignete Metallpulverschichtung an den stirnseitigen Druckflächen und Zentrierteilen eine Metallegierung mit sehr niedrigem Reibwert und an der Keilreibfläche eine Legierung mit höherem Reibwert (möglichst Haftreibwert gleich oder kleiner Gleitreibwert) vorhanden ist.

0161642

Um eine allseits günstige Reibwertcharakteristik und eine Verschleißschonung der Kegelscheiben zu erreichen, wird vorgeschlagen, diese Keilbacken aus solchen Messing-, Bronze- oder auch Alu- Legierungen herzustellen, welche technisch für hochbelastete Gleitteile (wie Lager- oder Synchronringe) Anwendung finden. Vorteilhaft soll damit die Eigenschaft ausgenutzt werden, daß der Unterschied zwischen Haftreibwert und Gleitreibwert möglichst klein ist.

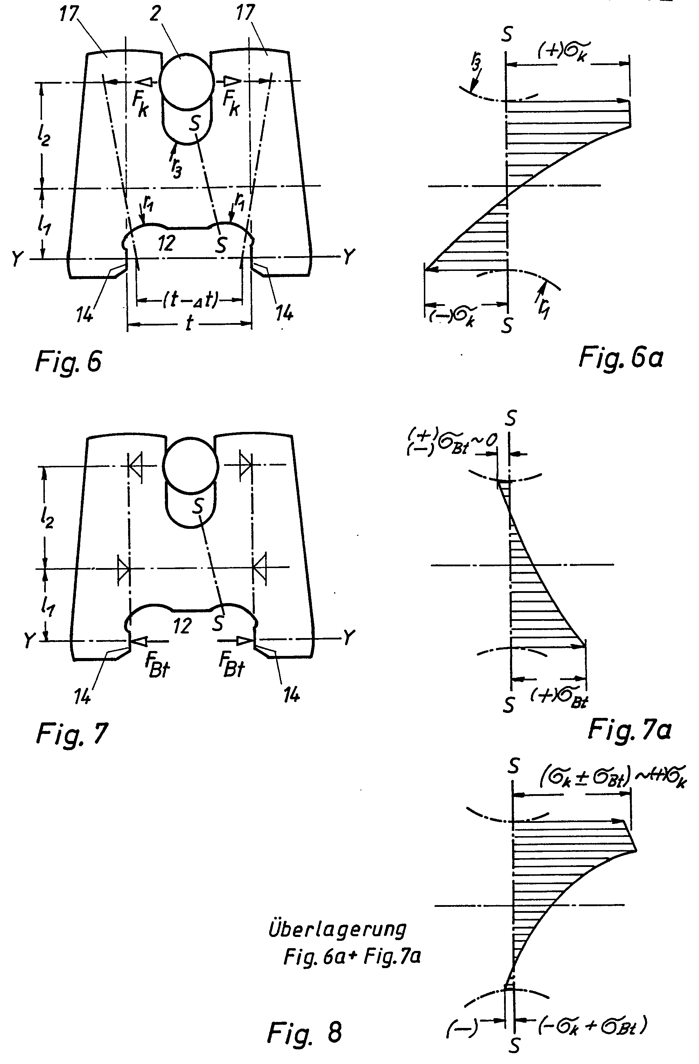

Anhand der Darstellungen Fig.6, Fig.7 und Fig.8 werden Zweck und Wirkung des Zangenprofiles der Kettenglieder erklärt.

Die Grundform dieses Kettengliedprofiles besteht aus zwei radial gerichteten Schenkeln und zwei in der Umlaufrichtung beanspruchbaren Stegen, und zwar einem inneren Zugsteg im Abstand $l_1$ von der Teillinie und einem äußeren Drucksteg, welcher als Vorspannkeil ausgebildet ist, imAbstand $l_2$ zum Zugsteg. Abstand $l_2$ ist größer als Abstand $l_1$ und dieser soll so klein wie möglich sein.

Die Form der Hohlkehle zwischen Zugsteg Schnitt S-S und Druckleiste 14 verläuft innerhalb einer $45^o$-Hauptrichtung mit vorzugsweise gerundeten Übergängen.

Die Zangenwirkung erklärt sich daraus, daß der Zugsteg Schnitt S-S als elastisch verformbares Gelenkglied zwischen den Zangenschenkeln 17 wirkt.

Der Vorspannkeil 2 ist unter einer Druckvorspannung zwischen den Zangenschenkeln 17 eingepreßt und bewirkt dadurch eine innere Verspannung des Kettengliedes in der Weise, daß innerhalb des Zugsteges Schnitt S-S in der Hohlkehlzone eine statische Druckspannung erzeugt wird. Damit soll die infolge des äußeren Lastangriffes $F_{Bt}$ verursachte Zugspannungskonzentration abgebaut werden.

Fig.6 / 6a : Statische Spannungsverteilung im Schnitt S-S infolge der Keil-Vorspannkraft $F_K$.

Fig.7 / 7a : Spannungsverteilung im Schnitt S-S infolge einer äußeren Betriebslast $F_{Bt}$ , deren Wert sich während eines Kettengliedumlaufes ändert.

Fig.8 : Spannungsverteilung bei Überlagerung der Betriebsspannung (7a) zur statischen Vorspannung (6a).
Durch Abstimmung der Profilmaße $l_1$, $l_2$ und Schnitt S-S kann
erreicht werden, daß in der Hohlkehlzone die resultierende
Spannung überwiegend im Druckspannungsbereich liegt, wodurch
die Dauerfestigkeit wesentlich gesteigert wird.

Ein alternatives Ausbildungsbeispiel bezüglich der Radialzentrierung und des Kettengliedprofiles zeigen die Darstellungen
Fig.9 und Fig.10.
Die Radialzentrierung zwischen einem äußeren und einem inneren
Kettenglied am Keilbacken 3 ist hier vollständig im Durchmesserbereich des Zentrierzapfens 31 untergebracht. Durch
Einsenken einer Ringnut = Zentriernut 111 an den Stirnflächen
der Kettenglieder wird ein vorstehendes Zapfensegment 112
erzeugt. Der Zentrierzapfen 31 des Keilbackens erhält eine
konzentrische Zentrierbohrung 311, in welche die Zapfensegmente 112 je von einem Außen- und einem Innenkettenglied passen.
Die Gelenkachse ist dann durch den Kreismittelpunkt der Zentriernuten 111 und durch die Zentrierbohrung 311 festgelegt.
Die Zentriernut kann durch Fräsen oder Schleifen mit Hohlwerkzeug oder spanlos vor dem Härten des Kettengliedes durch Eindrücken erzeugt werden.
Dieses Zentrierungssystem ist auch in der Weise ausführbar,
daß ein vom Keilbacken unabhängiges Zentrierungsteil in Form
eines flachen Zentrierringes oder Zentriertopfes verwendet
wird, welches formschlüssig in die Zentriernuten 111 eingreift; die Zentrierbohrung 31 entfällt dann.
Die planseitigen Druckflächen 16 können auch an der Stirnseite des Zentrierzapfens 31 vorgesehen werden.

Mit diesem Zentrierungssystem ist es auch möglich, die Profilform der Kettenglieder noch etwas günstiger zu gestalten.
So wird die Keilnut zwischen den Zangenschenkeln 17 verbreitert, der Nutgrund ist etwa rechtwinklig dreieckförmig und
der Vorspannkeil 2 hat einen Rechteckquerschnitt. Die Außenkettenglieder sind mit größerer Schenkelhöhe und mit parallelen Flankenseiten 151 ausgeführt. Dadurch wird die Biegesteifigkeit der Kettenglieder vergrößert.

0161642

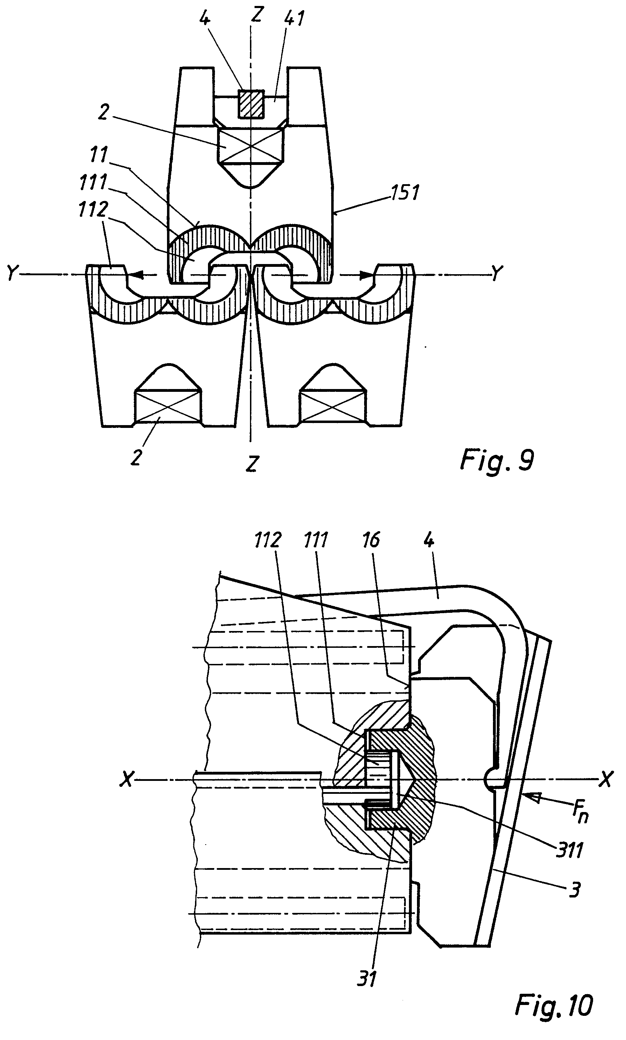

Im Zusammenhang mit dieser alternativen Profilform kann auch eine Verbesserung der axialen Keilbackenfixierung ausgeführt werden. Diese ist dann so gestaltet, daß je zwei Keilbackenpaare durch eine Backenklammer 4 axial gehalten werden. Wie aus Fig.9 ersichtlich, ist diese Backenklammer jeweils in Mitte eines Außenkettengliedes angeordnet und innerhalb dessen Keilnut mittels eines Klammerhalters 41 in radialer Mittelstellung spielfrei fixiert. Da die Backenklammern zwischen den Keilbacken möglichst spielfrei eingepaßt sind, wird erreicht, daß am gestreckten Kettenstrang alle Keilbacken senkrecht zur Teillinie Y-Y ausgerichtet werden.

Stufenlos regelbare Getriebe nach der im Oberbegriff beschriebenen Art wären ein idealer Drehmomentwandler für Kraftfahrzeugantriebe. Mit wenigen Ausnahmen (z.B. Ausführung nach DE-PS 2116950) konnten sich diese Getriebearten bisher aber nicht durchsetzen.
Auf der Basis der erfindungsgemäßen Vorschläge kann eine wesentliche Steigerung der Getriebeleistung erwartet werden, was für den genannten Anwendungsbereich notwendig wäre. Gegenüber dem Stand der Technik nach DE-PS 2116950 hätte ein Kraftübertragungselement gemäß der Erfindung den Vorteil, daß mit gleichen Teilen beliebige Umfangslängen hergestellt werden können.
Die Einzelteile sind so gestaltet, daß sie vollautomatisch herstellbar sind. Da die Komplettierung des Kettenstranges keine Verformungsarbeit erfordert, ist auch dieser Fertigungsvorgang mit einfachen Mitteln weitgehend automatisierbar.

- 12 -

0161642

Patentansprüche:

1. Kraftübertragungselement für stufenlos regelbare Getriebe, welche aus axial verstellbaren Kegelscheiben und einem endlosen Kraftübertragungselement bestehen, wobei letzteres aus einzelnen Gliedern kettenähnlich zusammengesetzt ist und die Kettenglieder in der Umlaufrichtung beidseitig der Teillinie hintereinandergereiht sind und die zugschlüssige Verbindung durch gegenseitige Überlappung der Kettenglieder hergestellt ist, wobei die Kettenglieder in der Axialrichtung massiv ausgebildet und die Gelenkfunktion ähnlich dem Prinzip von Wiegegelenken ausgeführt ist und zur Übertragung der Reibungskraft zwischen Kegelscheiben und Kettengliedern Keilbacken vorgesehen sind, gekennzeichnet durch folgende Merkmale,

a) die prismatischen Kettenglieder weisen ein zangenartiges Profil auf mit zwei radial ausgerichteten Schenkeln und dazwischen zwei in Umlaufrichtung wirkenden Stegen, und zwar mit einem inneren Zugsteg im Abstand ($1_1$) zur Teillinie(Y-Y) und mit einem äußeren Drucksteg im Abstand ($1_2$) zum Zugsteg, wobei der Abstand ($1_2$) größer ist als der Abstand ($1_1$) und wobei der Drucksteg als Vorspannkeil (2) ausgebildet und unter einer Druckvorspannkraft zwischen den Zangenschenkeln(17) des Kettengliedes eingepreßt ist;

b) die Überlappung der Gelenkflächen (14) weist in der Radialrichtung (Z-Z) einen Spielraum auf und die Mittel zur gelenkmäßigen Zentrierung der Kettenglieder sind an deren planparallelen Stirnseiten vorgesehen als kreisförmige Zentriermulden (11) an den Kettengliedern und als Zentrierzapfen (31) und Zentrieransätze (32a; 32i) an den Keilbacken (3);

c) die Keilbacken (3) sind jeweils auf der Mitte des Kettengelenks angeordnet und mittels ihrer Zentrierzapfen (31) an den Kettengliedern zentriert und jeder Keilbacken ist in der Axialrichtung (X-X) gegen ein äußeres (1a) und ein inneres (1i) Kettenglied abgestützt und ist gegenüber beiden anliegenden Kettengliedern in der Planebene (Y-Z) um einen kleinen Winkel schwenkbar und Keilbacken und Kettenglieder weisen planparallele Druckflächen (16; 36) auf.

- 13 -

0161642

2. Kraftübertragungselement nach Anspruch 1, dadurch gekennzeichnet, daß zur Fixierung der Keilbacken (3) in der Axialrichtung (X-X) U-förmige, federnde Backenklammern (4) vorgesehen sind.

3. Kraftübertragungselement nach Anspruch 1 und 2, dadurch gekennzeichnet, daß die Backenklammern (4) jeweils auf Mitte Außenkettenglied angeordnet und mittels Klammerhalter (41) im Außenkettenglied in Mittelstellung senkrecht zur Teillinie (Y-Y) fixiert sind.

4. Kraftübertragungselement nach den Ansprüchen 1 bis 3, dadurch gekennzeichnet, daß die Keilbacken (3) aus einem Werkstoff hergestellt sind, welcher in seiner Zusammensetzung und in seinen mechanischen Eigenschaften den technisch gebräuchlichen Gleitwerkstoffen entspricht.

5. Kraftübertragungselement nach Anspruch 1, dadurch gekennzeichnet, daß der Gelenkwinkel zwischen zwei Kettengliedern $\text{arc}\,\alpha_t = t/r$ auf eine Größenordnung von 0,1 begrenzt ist und daß die radiale Höhe der Gelenkdruckflächen (14) auf eine Größenordnung von $0,1 \times t$ begrenzt ist.

6. Kraftübertragungselement nach Anspruch 1, insbesondere das Merkmal b) betreffend, wonach die formschlüssige Radialzentrierung der Kettenglieder ausschließlich an deren Stirnseiten erfolgt, dadurch gekennzeichnet, daß die radial nach außen wirksamen Zentrierflächen innerhalb des Zentrierzapfens (31) des Keilbackens (3) vorgesehen sind und zwar derart, daß der Zentrierzapfen eine Zentrierbohrung (311) aufweist und an den Stirnseiten der Kettenglieder innerhalb der Zentriermulde (11) zum Gelenkmittelpunkt konzentrische Zentriernuten (111) vorgesehen sind.

7. Kraftübertragungselement nach Anspruch 6, dadurch gekennzeichnet, daß zur radialen Zentrierung zweier Kettenglieder an jeder Stirnseite ein vom Keilbacken unabhängiges Element in Form eines Ringes oder einer flachen Topfscheibe vorgesehen ist, welches formschlüssig in die Zentriernuten

0161642

(111) eingreift, und daß die Druckfläche (16) für die Abstützung der axialen Anpreßkraft $F_n$ innerhalb der Zentriermulde (11) an der Stirnseite des Zentrierzapfens (31) vorgesehen ist.

8. Kraftübertragungselement nach dem Oberbegriff des
Anspruches 1 und insbesondere mit einer Gelenkausbildung
ähnlich dem Prinzip der Wiegegelenke mit senkrecht zur Umlaufrichtung (Zugrichtung) ausgerichteten Druckflächen,
dadurch gekennzeichnet, daß an den inneren Kettengliedern
(1i) die Gelenkdruckfläche (14) als ebene Wiegeplatte ausgebildet ist und daß an den äußeren Kettengliedern (1a) eine
Wiegekante ~~(141)~~ mit stumpfem Kantenwinkel in der Form vorgesehen ist, daß die Gelenkdruckfläche eine unter einem kleinen
Winkel ($\varphi$) gegen die Zangenhohlkehle gerichtete Anfasung
(141) aufweist.

9. Kraftübertragungselement mit einer Gelenkausbildung nach
Anspruch 8, dadurch gekennzeichnet, daß Gelenkdruckleisten
(142) als Fremdteile aus Hartmetall an den Zangenbacken eingesetzt werden.

0161642

**Fig. 1**

Schnitt II

**Fig. 2**

0161642

31     2/4     36

Schnitt III aus Fig. 2

34   33    t    4    $F_R$   $\beta_R$

Fig. 3

Z   $\varphi$

$r_1$   $r_2$   A

13 i   141

14 i   14 a

13 a

Z

Fig. 4

142

Einzelheit 'A' aus Fig. 4
alternativ

Fig. 5

0161642

**Fig. 6**

**Fig. 6a**

**Fig. 7**

**Fig. 7a**

Überlagerung
Fig. 6a + Fig. 7a

**Fig. 8**

Fig. 9

Fig. 10

0161642

EUROPÄISCHER RECHERCHENBERICHT

Europäisches
Patentamt

Nummer der Anmeldung

## EINSCHLÄGIGE DOKUMENTE

EP 85105745.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - A1 - 2 949 061 (KÖRNER)<br>* Gesamt *<br>-- | 1 | F 16 H 9/24 |
| D,A | DE - C - 1 137 609 (REIMERS-GE-TRIEBE KG)<br>* Gesamt *<br>-- | 1 | |
| P,A | EP - A1 - 0 109 780 (BORG-WARNER)<br>* Gesamt *<br>-- | 2 | |
| D,A | DE - A1 - 3 027 834 (P.I.V. AN-TRIEB)<br>* Gesamt *<br>-- | 8,9 | |
| A | DD - A - 75 916 (WERNER)<br>* Gesamt *<br>---- | 8,9 | **RECHERCHIERTE SACHGEBIETE (Int. Cl.4)**<br><br>F 16 H 9/00 |

Der vorliegende Recherchenbericht wurde für alle Patentansprüche erstellt.

| Recherchenort | Abschlußdatum der Recherche | Prüfer |
|---|---|---|
| WIEN | 22-07-1985 | SCHATEK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82